# EUROPEAN PATENT APPLICATION

(11) **EP 4 530 113 A1**
(43) Date of publication of application: **02.04.2025**
(21) Application number: 23306596.0
(22) Date of filing: 26.09.2023
(51) Int. Cl.: B60K 35/10, B60K 35/21, B60K 35/22, B60K 35/25, B62D 1/04

(54) **STEERING WHEEL MOUNTED MULTI SENSORY INTERFACE**

(71) Applicant: TOYOTA JIDOSHA KABUSHIKI KAISHA, Toyota-shi, Aichi-ken, 471-8571 (JP)
(72) Inventor: GENTNER, Alexandre, 1140 BRUSSELS (BE); MATHOT, Jean-Christophe, 1140 BRUSSELS (BE)
(74) Representative: Cabinet Beau de Loménie

(57) **Abstract**

A controller (20) for a steering wheel (10) comprising:
a display (22) configured to provide output indicative of a control operation of a system (2) of a vehicle;
a physical input device (24) configured to receive a user input for operating the system (2) and to convert the user input into an operation input with respect to one or more input references; and
an angle compensation unit (26) configured to:
measure a first rotation angle of the steering wheel (10) with respect to a reference position, and
perform an angle compensation operation of rotating the output of the display (22) and the one or more input references by a compensation angle which is opposite to the first rotation angle.

## Description

### BACKGROUND OF THE INVENTION

### 1. Field of the Invention

The invention relates to the field of controllers, and in particular controller for a steering wheel of a vehicle.

### 2. Description of Related Art

It is known to provide controllers on a steering wheel of a vehicle, for the driver to operate systems of the vehicle without having to reach for a central control panel, for example.

However, the operation of such controllers still requires some attention from the driver and increases the mental load on the driver all the more so as the driver is performing a complex driving operation that requires their full attention, such as steering.

A need exists for controllers that can be operated by the driver with improved ease, and therefore improved safety, so as to reduce the impact on driving.

### SUMMARY OF THE INVENTION

In view of the above problem, a controller for a steering wheel is defined in claim 1, comprising:
a display configured to provide output indicative of a control operation of a system of a vehicle;
a physical input device configured to receive a user input for operating the system and to convert the user input into an operation input with respect to one or more input references; and
an angle compensation unit configured to:
   measure a first rotation angle of the steering wheel with respect to a reference position, and perform an angle compensation operation of rotating the output of the display and the one or more input references by a compensation angle which is opposite to the first rotation angle.

By "input references" are understood references with respect to which inputs of a physical input device are assessed by the physical input device to convert a user input into an operation input.

The angle compensation of both the input references and the displayed output facilitates the control operation of the system of the vehicle. In particular, by facilitating operation of the physical input device, the impact on gaze and on attention of the driver is reduced, who is then all the less diverted from the task of operating the vehicle, which is then performed with increased safety. For example, the impact on gaze may involve a reduction in time and/or frequency of glance on the controller required to suitably operate the controller and thus the system of the vehicle.

The physical input device may include a multiple-axis input device.

The physical input device may include a rotary dial. By rotary dial is understood a rotating input device. Rotary dial may receive input via its rotation direction, its angular speed, its angular position, or any other quantity related to its rotation.

The output of the display may include a selection position of the rotary dial, wherein the selection position is a position of the one or more input references that is being selected as an operation input, wherein the angle compensation unit may be configured to perform an angle compensation operation to rotate the selection position.

The controller may include a haptic unit, configured to provide haptic feedback upon actuation of the physical input device.

In view of the above problem, there is provided a steering wheel comprising a controller according to the present invention.

The controller may be provided radially inside an outer ring of the steering wheel at a distance no greater than 12 cm of the outer ring.

Such a position makes it possible for the driver to operate the controller while holding the steering wheel with a suitable hand placement. This makes it possible to reduce the disturbance of steering operation, which can then be safely performed.

In the steering wheel, an axis passing through the center of the steering wheel and the center of the controller may form an angle α between 0° and 45° with a horizontal axis of the steering wheel,
wherein the horizontal axis of the steering wheel is the axis of the steering wheel passing through the center of the steering wheel and which is horizontal when the steering wheel is in a rest position. The angle α may be a non-oriented angle.

The controller may be located in the upper half of the steering wheel.

Such a positioning makes it possible to reduce the change in angle of gaze when the driver is looking at the controller as compared to when the driver is looking at the road. The driver can thereby keep sufficient awareness of the driving situation on the road, which reduces the impact of operating the system of the vehicle on safe operation of the vehicle.

In view of the above problem, there is provided a vehicle comprising a steering wheel or a controller according to the present invention.

In view of the above problem, there is provided a steering wheel control method comprising:
receiving a user input on a physical input device for operating a system of a vehicle;
converting the user input into an operation input with respect to one or more input references;
displaying output indicative of a control operation of the system;
measuring a first rotation angle of the steering wheel with respect to a reference position; performing an angle compensation operation of rotating the displayed output and the input references by a compensation angle which is opposite to the first rotation angle.

In view of the above problem, there is provided a computer program, comprising instructions which, when the program is executed by at least one computer, cause the at least one computer to carry out the method of the present invention.

In view of the above problem, there is provided a computer-readable storage medium, comprising instructions which, when executed by at least one computer, cause the computer to carry out the method of the present invention.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 Figure 1 is a schematic view of a steering wheel comprising a controller according to a first embodiment of the invention.
FIG. 2 Figure 2 is a close-up view of the steering wheel comprising the controller according to the first embodiment of the invention during a steering operation.
FIG. 3 Figure 3 is a schematic view of a multiple positions of the steering wheel of Figure 1 in a steering operation.
FIG. 4 Figure 4 is a schematic view of a controller according to the first embodiment of the invention in (a) a plane view and (b) a side view.
FIG. 5 Figure 5 is a close-up view of the steering wheel comprising the controller according to a second embodiment of the invention during a steering operation.
FIG. 6 Figure 6 is a close-up view of the steering wheel comprising the controller according to a third embodiment of the invention during a steering operation.
FIG. 7 Figure 7 is a diagram representing the integration of a controller in a steering wheel of a vehicle.

### DETAILED DESCRIPTION OF EMBODIMENTS

Reference will now be made in detail to devices, a method, a program and a storage medium constituting exemplar embodiments of the present disclosure. The exemplar embodiments may be modified while remaining within the scope as defined by the claims. The description and the drawings must be understood as illustrative rather than restrictive.

Throughout the description, including the claims, the term "comprising a" should be understood as being synonymous with "comprising at least one" unless otherwise stated. In addition, any range set forth in the description, including the claims should be understood as including its end value(s) unless otherwise stated. Conversely, the generic use of the plural form may also include the singular form unless otherwise stated.

The present disclosure relates to a controller 20 for a steering wheel 10 of a vehicle 1.

It is understood that the controller 20 may be provided independently from the vehicle and/or independently from the steering wheel 10.

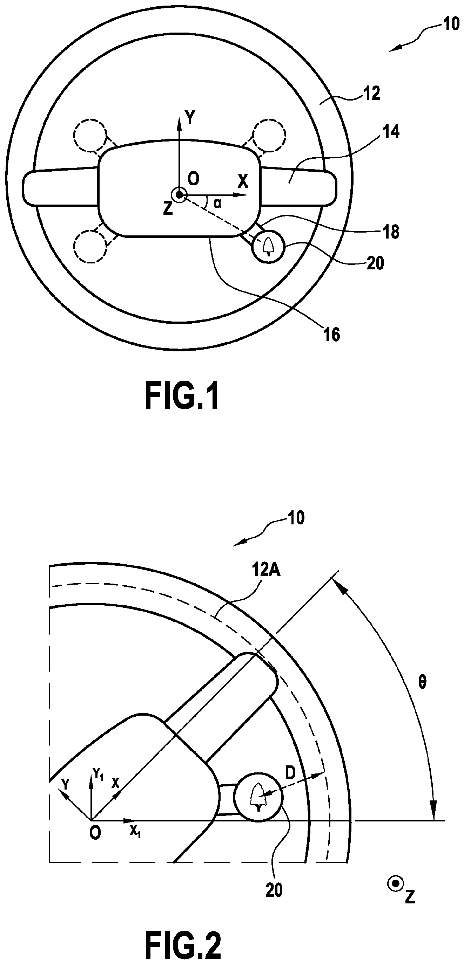

For the sake of facilitated understanding, the controller 20 will be described as integrated with a steering wheel 10, with respect to Figures 1 to 3 and Fig. 7.

As a preliminary remark, the controller 20 will be described hereunder with reference to a steering wheel 10 in which the controller 20 is to be integrated, and in particular with respect to a rest position of the steering wheel 10.

The rest position of the steering wheel 10 is the position of the steering wheel 10 without left or right steering. In other words, the rest position is the position of the steering wheel 10 when the vehicle is going straight.

More generally, the rest position is the position of the steering wheel wherein direction-changing members actuated by the steering wheel 10 do not affect the direction of the vehicle.

In the example of a passenger vehicle 1, the direction-changing members are wheels of the vehicle 1.

By extension, the steering wheel 10 may encompass any other kind of rotating steering member, such as a control wheel, and the direction-changing members may be any member suitable for changing the direction of the vehicle in which the rotating steering member is mounted, for example a rudder.

The horizontal axis X of the steering wheel 10 is defined as the axis in the plane of the steering wheel 10 that is horizontal when the steering wheel 10 is in the rest position and that passes through the center O of the steering wheel 10. The horizontal axis X is an axis in the reference frame of the steering wheel 10, i.e. an axis that is rotated together with the steering wheel 10.

It is noted that it is not necessary that the steering wheel 10 be horizontal. The steering wheel 10 may be tilted frontwards, i.e. tilted around the horizontal direction.

In other words, the horizontal axis X of the steering wheel 10 is parallel to the left-right direction of the vehicle when the steering wheel 10 is in the rest position.

The vertical axis Y of the steering wheel 10 is defined as the axis in the plane of the steering wheel 10 that passes through the center O of the steering wheel 10 perpendicular to the horizontal axis of the steering wheel 10. The vertical axis Y is an axis in the reference frame of the steering wheel 10, i.e. an axis that is rotated together with the steering wheel 10.

A front-rear axis Z of the steering wheel 10 is defined as the axis perpendicular to both the horizontal axis X and the vertical axis Y, and passing through the center O of the steering wheel 10. In the figures, X, Y and Z axes are orthogonal.

The front-rear axis Z typically forms a small angle with the direction of gaze of a driver of the vehicle 1. For the sake of facilitated understanding, the direction of gaze of the driver is assumed to be parallel to the front-rear axis Z.

The invention will be disclosed in a situation where the steering wheel 10 is circular. It is noted that the controller 20 described below is compatible with any other shape of steering wheel 10.

The steering wheel 10 can be a steering wheel 10 of a vehicle 1, for example of a passenger vehicle.

The steering wheel 10 comprises a circular outer ring 12, a central hub 16 and two horizontal spokes 14 from the central hub 16 to the outer ring 12. The spokes 14 may be horizontal in the reference frame of the steering wheel 10, i.e. of the horizontal axis X.

The outer ring 12 is not necessarily circular, and the expression "outer ring" may encompass any other outer shape of a steering wheel 10, either closed or open.

One or more spokes 14 may be provided at various positions around the central hub 16.

The central hub 16 may be of any shape, for example compatible with safety features, such as a horn and/or an airbag.

The steering wheel 10 may comprise the controller 20. The controller 20 is thus rotated with the steering wheel 10 as the steering wheel 10 is steered.

The controller 20 comprises a display 22, capable of displaying information to a user, for example via a video display or electronic ink.

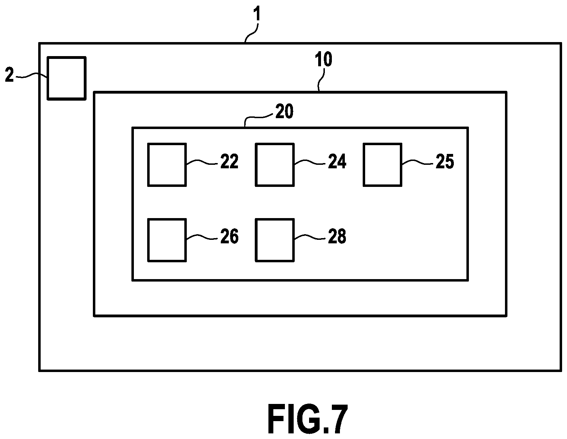

The display 22 provides output indicative of a control operation of a system 2 of the vehicle 1 (see Fig. 7).

The display 22 may for example display information indicative of the system 2 to control, comprising but not limited to windscreen wipers, turn signals, air conditioning, speakers, or a radio.

The information displayed may comprise identification of the system 2 to operate, and confirmation to start operation of the system 2. The information displayed may further comprise the operation intensity of windscreen wipers, the direction of operation of the turn signals, air temperature or air flux in the example of air conditioning, speaker output volume or sound spatialization in the example of speakers, and/or radio type (FM or AM) or specific frequency in the example of a radio.

For the sake of the explanation, the displayed information is symbolized by a tree, which is vertical in a case where the displayed information is suitably oriented for the driver to read or recognize its content.

The controller 20 may be provided radially inside the outer ring 12 of the steering wheel 10.

For example, the controller 20 may be provided radially inside the steering wheel 10 at a distance D no greater than 12 cm of the outer ring 12, for example between 4 cm and 8 cm.

The distance D is for example measured on the outer ring 12 side from the neutral axis 12A of the outer ring 12, as shown in Fig. 2, wherein the neutral axis 12A is defined as the virtual line passing through the center of sections of the outer ring 12, shown as a dashed line in Fig. 2. The distance D may also be measured on the outer ring 12 side from the innermost position of an edge of the outer ring 12 or alternately from the outermost position of an edge of the outer ring 12.

The distance D is for example measured on controller 20 side from the center of the controller 20, as shown in Fig. 2. The distance D may also be measured on the controller 20 side from the outermost position of edge of the controller 20.

This makes it possible for an operator to have their fingers, and in particular their thumbs, in the vicinity of the controller 20 when holding the steering wheel 10.

The controller 20 may be provided in the plane of the outer ring 12 of the steering wheel 10.

Alternately, the controller 20 may be provided frontward or rearward the steering wheel 10.

This makes it possible for the controller 20 to be easily accessible by the driver. In particular, the controller 20 can be easily accessed without detaching the hands from the steering wheel 10, for example by simply moving the wrist and/or the thumbs while holding the outer ring 12.

As illustrated in Fig. 1, the controller 20 may be provided so that the axis passing through the center O of the steering wheel 10 and the center of the controller 20 forms a non-oriented angle α with the horizontal axis X having values in the interval I=[0°;45°], or I=[5°;30°]. In other words, the angle α may have values in one of the intervals I, -I, 180°-I, and 180°+I, depending on how the non-oriented angle α is measured.

The controller 20 may be provided in the lower half of the steering wheel 10, as shown in the example of Fig. 1. Alternative positions of the controller 20 are shown in dashed lines. For example, instead of the lower right side position, the controller 20 may be provided in a lower left side position. The controller 20 may be provided in the upper half of the steering wheel 10. For example, the controller 20 may be provided in an upper left side position or an upper right side position.

Such positions make it possible for the controller 20 to be easily accessible by the driver suitably holding the steering wheel 10, even while steering.

The controller 20 comprises a physical input device 24 configured to receive a user input for operating a system 2.

For example, the user input received by the controller 20 may be user input related to the operation of the control operation of the system 2 that is displayed by the display 22.

User input is converted by the physical input device 24 into an operation input with respect to one or more input references.

Input references and/or operation inputs may be predetermined for each system 2 to be operated, and in particular for each operation of each system 2 to be operated.

An input reference may or may not be an operation input.

For instance, in the case of operating turn signals, left and right operation inputs respectively correspond to operation of left and right turn signals, and up or down operation inputs may correspond to operation of turn signals as hazard lights. In the case of operating air conditioning, down and up operation inputs respectively correspond to operations of decreasing or increasing air temperature and left and right operation inputs respectively correspond to operations of decreasing or increasing air flux.

Input references may for example include at least one of a direction, an angular position and an area of the controller 20 with respect to which operation inputs are assessed.

For instance, input reference may be an axis, wherein any input above the axis corresponds to a certain operation input (for example, "up") and any input below the axis corresponds to a certain operation input (for example, "down").

In the example of Fig. 2, the steering wheel 10 is steered with a steering angle θ.

In Fig. 2, the X-Y directions have been rotated with a steering angle θ relative to the rest position of Fig. 1, and X₁-Y₁ correspond to former X-Y directions when the steering wheel is in the rest position.

The controller 20 comprises an angle compensation unit 26 which measures a rotation angle of the steering wheel with respect to a reference position.

The reference position may be a fixed position. For instance, the reference position may be a fixed position with respect to the rest position. For example, the reference position may be a fixed position in the reference frame of the vehicle 1.

This makes it possible for the display output to be easily readable and the controller 20 to be easily operable by the driver, such that the reference position corresponds to a suitable reading and operating position that the angle compensation unit 26 replicates by the angle compensation operation.

For example, the reference position may be the rest position, in which case the angle compensation unit 26 measures the steering angle θ.

The angle compensation unit 26 defines a compensation angle, which is opposite to the rotation angle, and performs an angle compensation operation of rotating the output of the display 22 and the input references by the angle compensation operation.

In the example of Fig. 2, the reference position is the rest position and the compensation angle is -θ, such that the angle compensation operation of the display 22 provides a display output whose orientation is unaffected by the steering angle θ. The display output having a consistent orientation, the user can easily recognize and understand the content of the output of the display 22, and takes less time to do so.

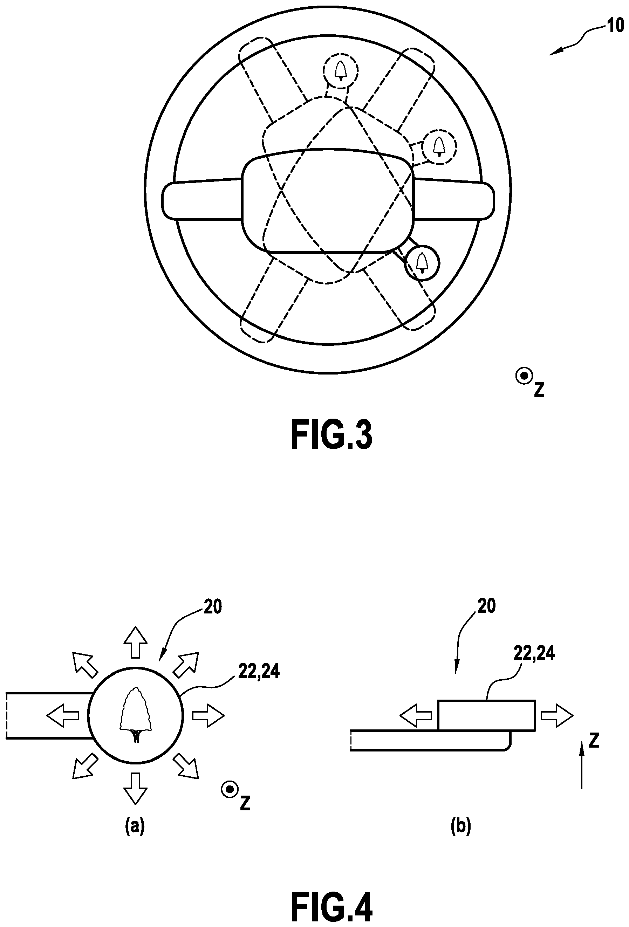

In particular, as illustrated in Fig. 3, wherein the steering wheel is shown in rest position (full line) and in two steered positions (dashed lines), the output of the display 22 has an orientation that is unaffected by the steering angle θ.

By similarly compensating the input references, the physical input device 24 can be operated with respect to the compensated display indicative of a control operation of the system of the vehicle.

In doing so, the operation of the system and the display via the controller 20 appear from a driver's point of view as if unaffected by the steering angle θ, which facilitates operation of the system via the controller 20 and increases safety of the operation of the controller 20.

As shown in Fig. 4, the controller 20 may be a multiple-axis input device.

A multiple-axis input device is an input device that can be operated by translation in a plane. In particular, the multiple-axis input device can be operated by translation in a continuous range of directions in at least a plane. In other words, the multiple-axis input device is not restricted to translations in a predetermined number of directions. Once no input is provided to the multiple-axis input device, it can be elastically brought back to a position associated with a lack of input, or with an input that is not associated with any operation input.

For example, the multiple-axis input device can be operated in the X-Y plane.

The multiple-axis input device can have one or more operation inputs.

For instance, the multiple-axis input device can have one operation input, two operation inputs, for example associated with "up-down" operation inputs, four operation inputs, for example associated with "up-down-left-right" operation inputs, or any other number of operation inputs.

In the example of Fig. 4, the multiple-axis input device has eight operation inputs, as indicated by the arrows, comprising four intermediate positions between "up-down-left-right" operation inputs in addition to "up-down-left-right" operation inputs.

The multiple-axis input device may be operated continuously in the X-Y plane, i.e. not constrained to predetermined directions. In such a case, predetermined operation inputs may for example be associated to operations areas, or operations angular sectors.

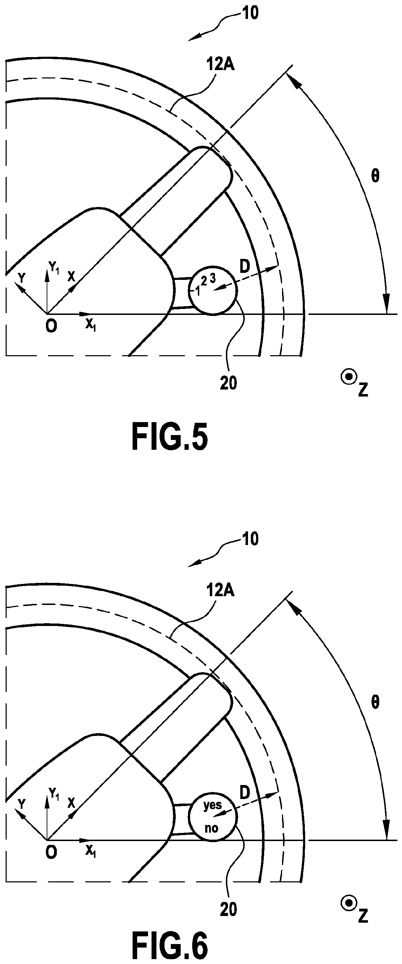

As shown in Fig. 5, the controller 20 may include a rotary dial.

The rotary dial may for example be actuated by rotation of an outer rotary element.

In such a case, the display 22 may for example display circumferentially arranged values of operation inputs and/or of input references.

For example, in the embodiment of Fig. 5, "1", "2" and "3" operation input values are displayed, as well as a selector facing the selected operation input values, in the case "1".

The angle compensation operation is applied to both a)displayed input reference values and/or displayed operation input values and b)to the selector so that the angle compensation operation in itself does not change the control operation.

As shown in Fig. 6, the display 22 may include a touchscreen.

The touchscreen may for example display a simple choice such as "yes" or "no" so as to confirm an operation.

The confirmation of a choice may be performed by touching the corresponding area of the touchscreen.

Naturally, the confirmation of a choice may also be made by any other input method, for example by actuating a multiple-axis input device towards the desired control operation.

It is therefore understood that the controller 20 may comprise one or more physical input devices 24 as defined with respect to Figs. 4, 5 and 6; and in particular may comprise one or more among a multiple-axis input device, a rotary dial and a touchscreen.

The controller 20 may also include a haptic unit 25. The haptic unit 25 may for example provide haptic feedback upon actuation of the physical input device 24.

Haptic feedback may for example be provided to confirm actuation of the physical input device 24, to confirm that a suitable control operation has been received.

Haptic feedback may be varying in intensity, in duration or in pattern. For example, upon increasing or decreasing an operation amount such as a temperature of an air conditioning, the haptic feedback may be increased or decreased in intensity or in duration accordingly.

Haptic feedback may be provided directly to the controller 20, for example so as to be felt by the fingers of the user upon actuation of the controller 20. Haptic feedback may be provided to the steering wheel 10, for example via the outer ring 12. Haptic feedback may be provided elsewhere in the vehicle, for example to the driver's seat.

Haptic feedback further reduces the attention a driver needs to provide to the controller 20 to suitably operate the system 2 of the vehicle via the controller 20, which further increases safety of driving.

For example, haptic feedback can decrease or even eliminate the need for the driver to glance at the controller 20 to confirm the operation of the controller 20, which further reduces diversion from the road.

As an alternative or in supplement, feedback may be provided in the form of audio feedback.

The controller 20 also includes a storage medium 28, storing a computer program for performing the angle compensation operation.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A controller (20) for a steering wheel (10) comprising:
a display (22) configured to provide output indicative of a control operation of a system (2) of a vehicle;
a physical input device (24) configured to receive a user input for operating the system (2) and to convert the user input into an operation input with respect to one or more input references; and
an angle compensation unit (26) configured to:
measure a first rotation angle of the steering wheel (10) with respect to a reference position, and
perform an angle compensation operation of rotating the output of the display (22) and the one or more input references by a compensation angle which is opposite to the first rotation angle.

2. The controller (20) according to claim 1, wherein the physical input device (24) includes a multiple-axis input device.

3. The controller (20) according to claim 1 or 2, wherein the physical input device (24) includes a rotary dial.

4. The controller (20) according to claim 3, wherein the output of the display (22) includes a selection position of the rotary dial, wherein the selection position is a position of the one or more input references that is being selected as an operation input, wherein the angle compensation unit (26) is configured to perform an angle compensation operation to rotate the selection position.

5. The controller (20) according to any of claims 1 to 4, including a haptic unit, configured to provide haptic feedback upon actuation of the physical input device (24).

6. Steering wheel (10) comprising the controller (20) according to any of claims 1 to 5.

7. Steering wheel (10) according to claim 6, wherein
the controller (20) is provided radially inside an outer ring (12) of the steering wheel (10) at a distance no greater than 12 cm of the outer ring (12).

8. Steering wheel (10) according to claim 7, wherein an axis passing through the center of the steering wheel (10) and the center of the controller (20) forms an angle (α) between 0° and 45° with a horizontal axis of the steering wheel (10), wherein the horizontal axis of the steering wheel (10) is the axis of the steering wheel (10) passing through the center of the steering wheel (10) and which is horizontal when the steering wheel (10) is in a rest position.

9. Steering wheel (10) according to claim 7 or 8, wherein the controller (20) is located in the upper half of the steering wheel (10).

10. Vehicle (1) comprising a controller (20) according to any of claims 1 to 5 or a steering wheel (10) according to any of claims 6 to 9.

11. Steering wheel control method , comprising:
receiving a user input on a physical input device (24) for operating a system (2) of a vehicle;
converting the user input into an operation input with respect to one or more input references;
displaying output indicative of a control operation of the system (2);
measuring a first rotation angle of the steering wheel with respect to a reference position;
performing an angle compensation operation of rotating the displayed output and
the input references by a compensation angle which is opposite to the first rotation angle.

12. A computer program comprising instructions which, when the program is executed by a computer, cause the computer to carry out the method of claim 11.

13. A computer-readable storage medium comprising instructions which, when executed by a computer, cause the computer to carry out the method of claim 11.
